# EUROPEAN PATENT APPLICATION

(11) **EP 1 773 049 A2**
(43) Date of publication of application: **11.04.2007**
(21) Application number: 06122004.2
(22) Date of filing: 09.10.2006
(51) Int. Cl.: H04N 5/445

(54) **Displaying channel information**

(30) Priority: 10.10.2005 KR 20050095145
(71) Applicant: Samsung Electronics Co., Ltd., Suwon-si, Gyeonggi-Do (KR)
(72) Inventor: Park, Bong-hwan, Hwaseong-si, Gyeonggi-do (KR)
(74) Representative: Walaski, Jan Filip

(57) **Abstract**

A display apparatus and a channel information displaying method thereof are provided. The channel information displaying method of a display apparatus having a channel storage unit for storing channel identification information and channel receipt information about a plurality of channels includes: determining whether a new channel is received in addition to the plurality of channels, based on the channel identification information and the channel receipt information stored in the channel storage unit; storing the channel identification information and the channel receipt information about the new channel in the channel storage unit when the new channel is received; and displaying an indication indicating that the new channel is added and the channel identification information. With this configruation, a user may recognize whether a channel is added and which channel is added.

## Description

A display apparatus such as a television (TV) receives a broadcast signal via analogue broadcasts such as ground wave signals, or via digital TV broadcasts, cable TV broadcasts, etc., and processes the received broadcast signal, thereby outputting image and sound. As broadcasting techniques are developed, the number of channsels being broadcast is increased. Thus, channels are frequently changed or added.

However, most users watch the TV through the initial channel setup without scanning and updating the channels occasionally. Therefore, it is difficult for users to determine when channels are changed or added. Accordingly, it is problematic for users to watch changed or newly-added channels.

Thus, there exists a need for periodically monitoring channels added by a broadcasting station, storing channel information if there is an added channel, and displaying a channel list, channel information, or an electronic program guide (EPG) containing the added channel if a user instructs the display apparatus to display the channel list, channel information, or an EPG.

Further, if the channel information is updated automatically, it is difficult and inconvenient for the user to recognize whether a channel is added and, if so, which channel is added.

The present invention provides a display apparatus which allows a user to recognize whether a channel is added, and if so, which channel is added, and a channel information displaying method thereof.

According to an aspect of the present invention, there is provided a channel information displaying method of a display apparatus having a channel storage unit for storing channel identification information and channel receipt information related to a plurality of channels, the method comprising: determining whether a new channel is received in addition to the plurality of channels, based on the channel identification information and the channel receipt information stored in the channel storage unit; storing channel identification information and channel receipt information related to the new channel in the channel storage unit if the new channel is received; and displaying an indication indicating that the new channel is added and the channel identification information related to the new channel.

According to an aspect of the invention, the channel information displaying method further comprises removing the indication if the indication is displayed a number of times.

According to an aspect of the invention, the channel information displaying method further comprises removing the indication if the indication is displayed over a period of time.

According to an aspect of the invention, the indication comprises a letter.

According to an aspect of the invention, the indication comprises at least one of a symbol and an image.

According to another aspect of the present invention, there is provided a channel information displaying method of a display apparatus having a display unit and a channel storage unit which stores channel identification information and channel receipt information related to a plurality of channels, the method comprising: determining whether a new channel is received in addition to the plurality of channels, based on the channel identification information and the channel receipt information stored in the channel storage unit; storing channel identification information and channel receipt information related to the new channel in the channel storage unit if the new channel is received; and displaying notification information indicating that the new channel is added along with an image on the display unit if the image corresponds to the new channel.

According to an aspect of the invention, the channel information displaying method further comprises removing the indication of the notification information if the notification information is displayed a number of times.

According to an aspect of the invention, the channel information displaying method further comprises removing the indication of the notification information if the notification information is displayed over a period of time.

According to an aspect of the invention, the notification information comprises a letter.

According to an aspect of the invention, the notification information comprises at least one of a symbol and an image.

Still another aspect of the present invention provides a display apparatus comprising a display unit, a tuner which receives a broadcasting signal, and a signal processor which processes the received broadcasting signal, the display apparatus comprising: a channel storage unit which stores channel identification information and channel receipt information related to a plurality of channels; a user interface (UI) generator which generates a list corresponding to the channel identification information; and a controller which controls the channel storage unit to store channel identification information and channel receipt information related to a new channel and controls the UI generator to generate the list indicating that the new channel is added if the new channel is received in addition to the plurality of channels, based on the channel identification information and channel receipt information related to the new channel stored in the channel storage unit.

According to an aspect of the invention, the controller controls the UI generator to remove an indication that the new channel is added if the indication is displayed a number of times.

According to an aspect of the invention, the controller controls the UI generator to remove an indication that the new channel is added if the indication is displayed over a period of time.

According to an aspect of the invention, the indication comprises letters or symbols.

According to yet another aspect of the present invention, there is provided a display apparatus comprising a display unit, a tuner which receives a broadcasting signal, and a signal processor which processes the received broadcasting signal, the display apparatus comprising: a channel storage unit which stores channel identification information and channel receipt information related to a plurality of channels; a UI generator which generates notification information informing a user that a new channel is added; and a controller which controls the channel storage unit to store channel identification information and channel receipt information related to the new channel if the new channel is received in addition to the plurality of channels, based on the channel identification information and the channel receipt information stored in the channel storage unit, and controls the UI generator to generate the notification information if an image corresponding to the new channel is displayed on the display unit.

According to an aspect of the invention, the controller controls the UI generator to remove the notification information if the notification information is displayed a number of times.

According to an aspect of the invention, the controller controls the UI generator to remove the notification information if the notification information is displayed over a period of time.

According to an aspect of the invention, the indication comprises letters or symbols.

Embodiments of the invention will now be described, by way of example, with reference to the accompanying drawings, in which:
Figure 1 is a block diagram of a display apparatus according to an exemplary embodiment of the present invention;
Figures 2A and 2B are views illustrating a channel list window and a channel information window according to an exemplary embodiment of the present invention; and
Figure 3 is a flowchart illustrating an operation of a display apparatus according to an exemplary embodiment of the present invention.

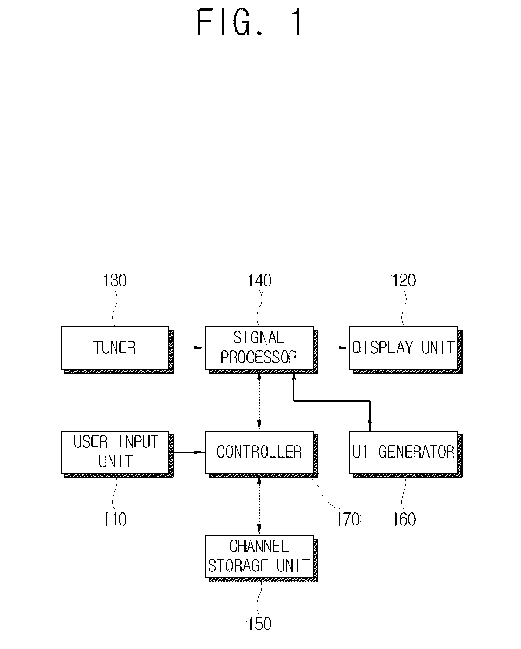

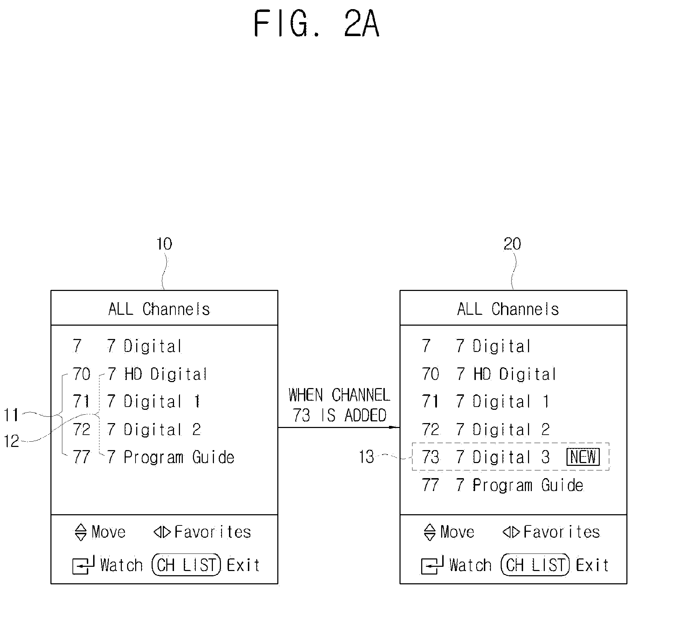

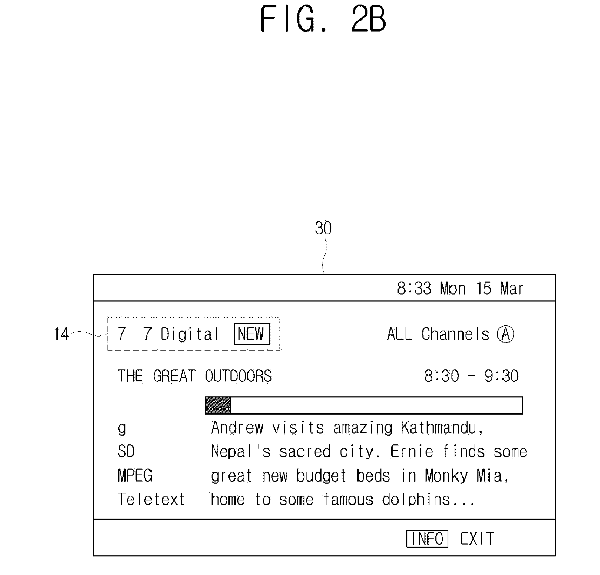

Figure 1 is a block diagram of a display apparatus 100 according to an exemplary embodiment of the present invention, and Figures 2A and 2B are views illustrating a channel list window and a channel information window according to an exemplary embodiment of the present invention. An exemplary embodiment of the present invention will be described in more detail with reference to Figures 1, 2A and 2B.

A display apparatus 100 according to an exemplary embodiment of the present invention receives and processes a broadcasting signal from a broadcasting station to display it on a display unit 120. The display apparatus 100 according to the exemplary embodiment includes a user input unit 110, a display unit 120, a tuner 130, a signal processor 140, a channel storage unit 150, a user interface (UI) generator 160 and a controller 170.

The user input unit 110 receives an instruction from a user and transfers it to the controller 170. The user input unit 110 may include channel up/down keys of the display apparatus 100, numeric keys for selecting a broadcasting channel, a menu key provided in a remote controller or a casing, and a key signal generator for generating a key signal corresponding to the operation of keys. The user input unit 110 is instructed by a user through a menu key to display a channel list, channel information, or an EPG, and thus transmits the instruction to the controller 170. The display unit 120 receives a video signal converted by the signal processor 140 and displays an image on a screen. The display unit 120 may include one of Cathode Ray Tube (CRT), Liquid Crystal Display (LCD), and Plasma Display Panel (PDP). Alternatively, the display unit 120 can be achieved by other types of displays which display images.

The tuner 130 tunes the broadcasting signal received in the display apparatus 100 to a broadcasting signal having a corresponding frequency bandwidth in accordance with the channel selected by the user. The tuner 130 applies a demodulation process and an error correction process to the tuned broadcasting signal corresponding to a specific channel, and outputs it in a transport stream format. Further, the tuner 130 splits the tuned broadcasting signal into a video signal, an audio signal and various additional data and outputs them in a bit stream format.

The signal processor 140 converts the video signal received from the controller 170 to have a proper format, for example, digital RGB signal with which the display unit 120 can display an image, and outputs it to the display unit 120. Here, the signal processor 140 includes a scaler serving to convert vertical frequency, resolution, screen ration, etc., of the video signal received from the controller 170 in order to properly format the signal for the display unit 120.

The channel storage unit 150 stores channel information such as a channel name, a channel frequency, etc. The channel name and the channel frequency of the exemplary embodiment are used as channel identification information and channel receipt information, respectively. The channel storage unit 150 can be implemented by a flash memory, an Electrically Erasable Programmable Read-Only Memory (EEPROM), an Erasable Programmable Read-Only Memory (EPROM), etc.

The UI generator 160 generates a UI signal according to control of controller 170. When the UI generator 160 is controlled by the controller 170 to display the channel list, it generates a channel list which indicates a new channel is added to the channel list. Here, the channel lists 10, 20 according to the exemplary embodiment show a channel number 11 and brief information 12 corresponding to the channel number as shown in Figure 2A. The channel list 20 after a new channel is added thereto shows "NEW" on the right side of the added channel number 73 (refer to "13" of Figure 2A) unlike the channel list 10 before the new channel is added.

In another exemplary embodiment shown in Figure 2B, when the UI generator 160 is controlled by the controller 170 to display channel information about a new channel, it generates channel information 30 which indicates a new channel is added to the channel list. Here, the channel information 30 according to the exemplary embodiment shows detailed information about the channel such as a channel name, a program name of a corresponding time range, etc. If the channel information is in relation to the new channel, "NEW" is displayed on the right side of a channel name 14 of the new channel to indicate the added channel.

In another exemplary embodiment, when the UI generator 160 is controlled by the controller 170 to display an image corresponding to the new channel, it generates an icon such as "NEW" to be shown on a region, for example, on an upper right side of the display unit, which indicates the new channel is added. Here, the word "NEW" is employed as only an example, and not limited thereto. Alternatively, various words, a mark, a symbol, etc. can be used for indicating the new channel. For example, "ADDED" can be used instead of "NEW".

The controller 170 generally controls the operation of the user input unit 110, the display unit 120, the tuner 130, the signal processor 140, the channel storage unit 150, and the UI generator 160. If the controller 170 determines that a new channel was received in addition to the stored channels on the basis of the channel name, the channel frequency, etc. stored in the channel storage unit 150, the controller 170 controls the channel storage unit 150 to store the channel name, channel frequency, etc. of the received new channel.

When the controller 170 is instructed to display the channel list according to input signals from the user input unit 110, it displays "NEW" on the next to new channel name to indicate a new channel is added to the channel list, and controls the UI generator 160 to generate a channel list which sorts and shows the new channel along with the existing channels. Alternatively, the channel list according to the exemplary embodiment may be used in various applications, for example, representing "NEW" for indicating a new channel so as to inform a user that the new channel is an added, through other means such as the channel information, the EPG, etc. In addition, if an image is displayed corresponding to the new channel, the controller 170 may control the UI generator 160 to generate an icon such as "NEW" to be displayed in a region of the display unit, thereby indicating that the new channel is added.

The controller 170 may be implemented as a software program to be adapted for a universal processor, and stored in a memory (for example, ROM) to be executed by the universal processor.

In the exemplary embodiment, it may be desirable to stop displaying the indication that a channel is a new channel once it has been displayed for a certain period of time or a certain number of times. The period of time or the number of times may be setup through the user input unit 110.

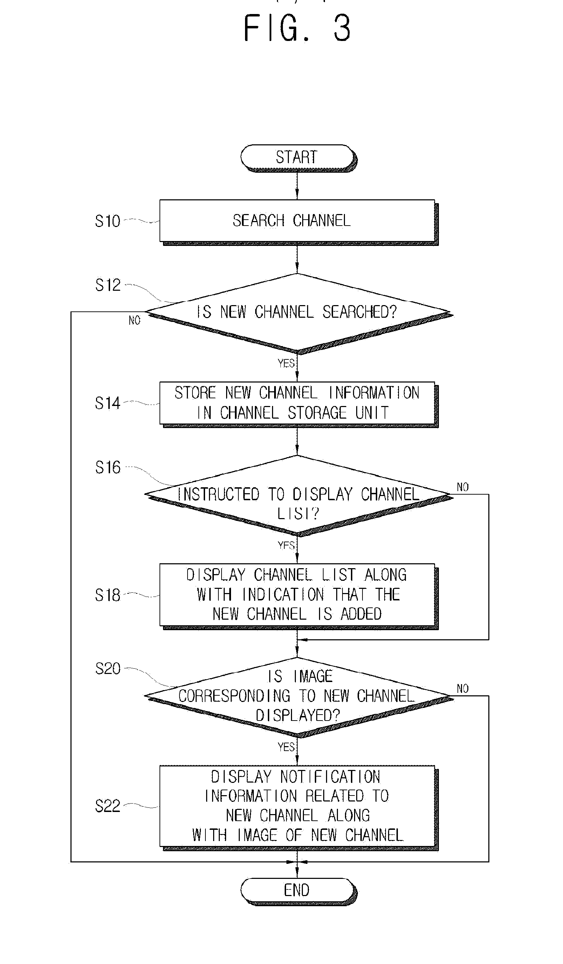

Figure 3 is a flowchart illustrating the operation of a display apparatus 100 according to an exemplary embodiment of the present invention. The operation of the display apparatus 100 will now be described in more detail with reference to Figure 3.

The controller 170 periodically monitors the broadcast signal received at the display apparatus 100 and searches channels transmitted on the broadcast signal (S10). If a new channel is not found, for instance only the channels stored in the channel storage unit 150 (S12) are found, the currently stored channels are kept and channel monitoring is suspended until a next searching time. On the contrary, if a new channel is found in addition to the channels stored in the channel storage unit 150, the controller 170 controls the channel storage unit 150 to store channel information corresponding to the new channel such as the channel name, the channel frequency and the like therein (S14).

When the controller 170 receives an input signal from the user input unit 110, which instructs the controller 170 to display the channel list (S16), the controller 170 controls the UI generator 160 to generate the channel list in which "NEW" is represented on the right side of the new channel name, and displays the generated channel list on the display unit 120 (S18). When the controller 170 is instructed to display images corresponding to the new channel (S20), it displays the images corresponding to the new channel on the display unit 120 and simultaneously displays an icon representing "NEW" on the upper right side of the display unit (S22). In this exemplary embodiment, the icon is used as notification information, which indicates the new channel is added, according to the present invention. Alternatively, the notification information may be implemented in other forms.

Thus, a user can recognize whether channel is added and which channel is added. As mentioned above, the exemplary embodiments of the present invention provide a display apparatus and a channel information displaying method thereof, in which a user may recognize whether a channel is added and which channel is added.

Although a few exemplary embodiments of the present invention have been shown and described, it will be appreciated by those skilled in the art that changes may be made in these exemplary embodiments without departing from the present invention, the scope of which is defined in the appended claims.

## Claims

1. A method of displaying channel information at a display apparatus configured to receive a signal including a plurality of channels, the method comprising:
determining whether the signal includes a new channel based on information relating to previously received channels;
storing information relating to the new channel if it is determined that the signal includes a new channel; and
displaying an indication that the new channel is available.

2. A method according to claim 1, wherein the information relating to previously received channels comprises channel identification information and channel reception information stored in a channel storage unit of the display apparatus.

3. A method according to claim 1 or 2, wherein the step of storing information comprises storing channel identification information and channel reception information.

4. A method according to claim 1, 2 or 3, further comprising displaying channel identification information relating to the new channel.

5. A method according to any preceding claim, further comprising:
stopping displaying of the indication once the indication has been displayed a certain number of times.

6. A method according to any preceding claim, further comprising:
stopping displaying the indication once the indication has been displayed for a certain period of time.

7. A method according to any preceding claim, wherein the indication comprises a word.

8. A method according to any preceding claim, wherein the indication comprises at least one of a symbol and an image.

9. A method according to any preceding claim, wherein the step of displaying the indication comprises displaying the indication along with an image on a display unit of the display apparatus, wherein the image corresponds to the new channel.

10. A method according to any preceding claim, wherein the steps of determining whether the signal includes a new channel and storing information relating to the new channel if it is determined that the signal includes a new channel are performed automatically at predetermined time intervals.

11. Apparatus for receiving a signal including a plurality of channels, the apparatus comprising:
means for storing information relating to the plurality of channels;
a user interface (UI) generator; and
a controller configured to determine whether the signal includes a new channel based on information relating to previously received channels, to control the storing means to store information relating to the new channel if it is determined that the signal includes a new channel and to control the UI generator to display an indication on a display that the new channel is available.

12. Apparatus according to claim 11, wherein the storing means comprises a channel storage unit and wherein the information relating to previously received channels comprises channel identification information and channel reception information stored in the channel storage unit.

13. Apparatus according to claim 11 or 12, wherein the information relating to the new channel comprises channel identification information and channel reception information.

14. Apparatus according to claim 11, 12 or 13, further comprising a display, wherein the controller is configured to control the UI generator to display channel identification information relating to the new channel.

15. Apparatus according to claim 14, wherein the UI generator is configured to generate a channel list displayed via the display and wherein the controller controls the UI generator to generate a channel list indicating that the new channel is new if it is determined that the signal includes a new channel.

16. Apparatus according to claim 15, wherein the controller controls the UI generator to remove from the channel list the indication that the new channel is new once the indication has been displayed a certain number of times.

17. Apparatus according to claim 15 or 16, wherein the controller controls the UI generator to remove from the channel list the indication that the new channel is new once the indication has been displayed for a certain period of time.

18. Apparatus according to any one of claims 14 to 17, wherein the UI generator generates an indication comprising a word to indicate that the new channel is new, and the indication is displayed on the display.

19. Apparatus according to any one of claims 14 to 18, wherein the UI generator generates an indication comprising a symbol to indicate that the new channel is new, and the indication is displayed on the display.

20. Apparatus according to any one of claims 14 to 19, wherein the controller is configured to control the UI generator to generate the indication when an image corresponding to the new channel is displayed on the display unit.
